# EUROPÄISCHE PATENTSCHRIFT

(11) **EP 0 655 295 B1**
(45) Veröffentlichungstag und Bekanntmachung des Hinweises auf die Patenterteilung: **29.12.1997**
(21) Anmeldenummer: 94117315.5
(22) Anmeldetag: 03.11.1994
(51) Int. Cl.: B23P 11/02, B21B 27/03

(54) **Metallkörper sowie Verfahren zu dessen Herstellung**
Metal body and method of manufacture
Corps métallique et procédé pour sa fabrication

(30) Priorität: 25.11.1993 DE 4340134
(43) Veröffentlichungstag der Anmeldung: 31.05.1995
(73) Patentinhaber: Schroeder, Günter, D-41564 Kaarst (DE)
(72) Erfinder: Schroeder, Günter, D-41564 Kaarst (DE)
(74) Vertreter: Paul, Dieter-Alfred, Dipl.-Ing.

(56) Entgegenhaltungen:
- EP-A- 0 049 771
- AT-B- 326 079
- DE-A- 2 536 354
- DE-A- 3 730 226
- FR-A- 1 045 082
- US-A- 3 432 902
- US-A- 3 585 710
- US-A- 4 112 564
- PATENT ABSTRACTS OF JAPAN vol. 15, no. 134 (M-1099) 3. April 1991 & JP-A-03 018 405 (KUBOTA) 28. Januar 1991

## Beschreibung

Die Erfindung betrifft einen Metallkörper, insbesondere als Walzring, mit einem Grundkörper und einem am Umfang sitzenden Verschleißring, wobei der Grundkörper aus einem Material besteht, das einen höheren Wärmeausdehnungskoeffizient und einen geringeren Verschließwiderstand als das Material des Verschleißrings hat, wobei der Verschleißring über eine Lötverbindung mit dem Grundkörper verbunden ist. Die Erfindung betrifft des weiteren ein Verfahren zur Herstellung eines solchen Metallkörpers, bei dem ein Verschleißring gefertigt sowie ein Grundkörper aus einem Material hergestellt wird, das einen höheren Wärmeausdehnungskoeffizient und einen geringeren Verschleißwiderstand als das Materials des Verschleißrings hat, und bei dem der Verschleißring anschließend an dem Grundkörper dadurch fixiert wird, daß an einer Verbindungsfläche zwischen Grundkörper und Verschleißring Lotmaterial aufgetragen wird und daß der Metallkörper nach Zusammensetzen von Verschleißring und Grundkörper auf eine für die Herstellung einer Lötverbindung notwendigen Temperatur erhitzt und dann wieder abgekühlt wird.

Ein solcher Metallkörper sowie ein solches Verfahren sind aus US-A-3 585 710 bekannt.

Metallkörper mit einem Aufbau der vorgenannten Art kommen vielfach zum Einsatz. Zur Verbesserung des Verschleißwiderstandes haben sie am Umfang einen Verschleißring, der aus einem Hartmetall oder Metallkarbiden besteht und deshalb einen höheren Verschleißwiderstand hat als der in der Regel aus Gußeisen oder Stahl bestehende Grundkörper. Solche Metallkörper werden beispielsweise in Walzwerken in Form von Reduzierwalzen verwendet, wobei mehrere solcher Reduzierwalzen innerhalb eines Streckreduzierwalzwerks gegeneinanderstehend angeordnet sind.

Probleme bereitet dabei die Verbindung zwischen dem Grundkörper und dem Verschleißring sowie die Empfindlichkeit des für Verschleißringe üblicherweise verwendeten Materials gegenüber Zugkräften. Bei einer bekannten Lösung ist der Grundkörper aus zwei Ringscheiben aufgebaut, die umfangsseitig eine Ringnut einschließen und mittels Schrauben in axialer Richtung miteinander verspannbar sind. In die Ringnut ist der Verschleißring eingelegt. Er wird durch die Spannkräfte reibschlüssig gehalten.

Auf Grund des Reibschlusses ist der Halt des Verschleißrings innerhalb der Ringnut begrenzt. Es ist vorgekommen, daß der Verschleißring durchrutschte und hierdurch an den Klemmflächen Reibungshitze entstand, die zu einem Brechen des Verschleißrings führte. Auch hat es sich erwiesen, daß der Verschleißring bei Blockaden des Walzwerkes wegplatzt.

Daneben sind Metallkörper der eingangs genannten Art bekannt, die auf der Lehre nach der DE-PS 27 0̸4 70̸2 beruhen. Die Verbindung von Verschleißring und Grundkörper geschieht hier vermittels einer Übergangszone, in der das Hartmetall des Verschleißrings mit dem graphitischen Gußeisen des Grundkörpers vermischt ist. Die Kosten der Herstellung eines solchen Metallkörpers sind aus mehreren Gründen außerordentlich hoch. Es muß nämlich für jede Abmessung ein Gießmodell angefertigt werden. Außerdem benötigt man für die Herstellung unverhältnismäßig große Mengen von Gußeisen. Überdies liegt der Ausschußanteil - je nach Abmessung - bei 50̸ %. Durch die bei diesem Verfahren unvermeidlich auftretenden Spannungen in axialer Richtung neigt der Verschleißring zu Rißbildung.

Der Erfindung liegt deshalb die Aufgabe zugrunde, einen Metallkörper der eingangs genannten Art so zu gestalten, daß eine gute Verbindung zwischen Verschleißring und Grundkörper gewährleistet ist und die Herstellungskosten gering sind. Ferner liegt der Erfindung die Aufgabe zugrunde, ein für die Herstellung eines solchen Metallkörpers besonders geeignetes Verfahren bereitzustellen.

Der erste Teil der Aufgabe wird erfindungsgemäß dadurch gelöst, daß Verschleißring und Grundkörper im Verhältnis zueinander derart ausgebildet sind, daß nach der für die Herstellung der Lötverbindung notwendigen Erhitzung von Grundkörper und Verschleißring infolge der Abkühlung radial nach innen gerichtete Schrumpfkräfte von dem Grundkörper über die Lötverbindung auf den Verschleißring unter Ausbildung einer Druckspannung über dessen Querschnitt übertragen werden.

Grundlage der Erfindung ist zum einen die Lötverbindung zwischen Grundkörper und Verschleißring, wobei insbesondere hochschmelzende Lote in Frage kommen, beispielsweise Bronze- und Silberlote. Hierdurch wird eine sehr feste Verbindung zwischen Grundkörper und Verschleißring geschaffen. Die Gefahr des Durchrutschens, also einer Relativbewegung zwischen Verschleißring und Grundkörper besteht nicht. Zum anderen ist ein wesentliches Element der Erfindung die gegenseitige Dimensionierung von Grundkörper und Verschleißring, und zwar in der Weise, daß beim Abkühlen des Metallkörpers nach Herstellung der Lötverbindung über diese Lötverbindung radial nach innen gerichtete Schrumpfkräfte auf den Verschleißring übertragen werden. Dabei wird ausgenutzt, daß der Grundkörper aus einem Material, beispielsweise Gußeisen oder Stahl, besteht, welches bei einer Abkühlung einer erheblich höheren Schrumpfung unterliegt als das Material des Verschleißrings. Der Verschleißring schrumpft also nicht so stark wie der Grundkörper, so daß die auf ihn über die Lötverbindung übertragenen Schrumpfkräfte zu einer Druckspannung über den Querschnitt des Verschleißrings führt. Diese Druckspannung widersetzt sich Einflüssen, die unter Umständen zu dem Entstehen von Zugspannungen innerhalb des Verschleißrings führen könnten. Auf diese Weise ist der Verschleißring gegen die gefährlichen Zugspannungen geschützt, neigt also nicht zum Brechen oder zu Rißbildung.

In Ausbildung der Erfindung ist vorgeschlagen, daß der Grundkörper in einer durch den Verschlußring gehenden Teilungsebene in zwei Grundkörperscheiben geteilt ist, wobei diese vorzugsweise einen Abstand zueinander haben, der so bemessen ist, daß die Grundkörperscheiben auch bei Erhitzung auf die für die Herstellung der Lötverbindung notwendigen Temperatur nicht zur Anlage kommen. Die beiden Grundkörperscheiben werden also praktisch über den Verschleißring miteinander verbunden und behindern sich nicht gegenseitig infolge der Ausdehnung bei Erhitzung und der Schrumpfung bei Abkühlung. Vorzugsweise sollte die Teilungsebene durch die Mitte des Verschleißrings gehen.

Sofern der Verschleißring - wie an sich bekannt - innerhalb einer Ringnut im Grundkörper sitzt, sollte die Ringnut einen V-förmigen Nutgrund aufweisen. Auf diese Weise kann durch Druck auf die beiden Grundkörperscheiben in axialer Richtung über den V-förmigen Nutgrund ein Druck in radialer Richtung ausgeübt werden, der das überschüssige Lotmaterial aus dem Lötspalt herausdrückt und für den nötigen, kleinen Lötspalt sorgt, wodurch eine hohe Festigkeit der Lötverbindung erzielt wird, welche Voraussetzung für die Übertragung der radialen Schrumpfspannungen auf den Verschleißring ist. Dabei ist es zweckmäßig, wenn der Nutgrund symmetrisch zur Teilungsebene liegt.

Um eine möglichst große Verbindungsfläche zu schaffen, sollte der Verschleißring über die Lötverbindung vollflächig mit allen Innenseiten der Ringnut verbunden sein. Es sind jedoch Anwendungsfälle denkbar, bei denen sich die Lötverbindung nur über den Nutgrund der Ringnut erstreckt.

Was den zweiten Teil der Aufgabe angeht, ist das erfindungsgemäße Verfahren dadurch gekennzeichnet, daß Grundkörper und Verschleißring bei der Herstellung derart ausgebildet werden, daß der Grundkörper bei der Abkühlung des Metallkörpers einen solchen Radialschrumpf entwickelt, daß über die Lötverbindung radial nach innen gerichtete Schrumpfkräfte unter Ausbildung einer Druckspannung über dessen Querschnitt auf den Verschleißring übertragen werden.

Nach der Erfindung wird also die Lötverbindung durch Erhitzen von Verschleißring und Grundkörper hergestellt, so daß sich beim Abkühlen Schrumpfkräfte entwickeln können, die dann über die Lötverbindung auf den in der Schrumpfung zurückbleibenden Verschleißring übertragen werden und dort zur Entstehung von Druckspannungen führen.

Die Herstellung der Lötverbindung sollte entweder unter Schutzgas oder im Vakuum erfolgen. Dabei ist es günstig, wenn wenigstens die für die Lötverbindung vorgesehenen Verbindungsflächen von Grundkörper und Verschleißring aufgerauht werden, beispielsweise durch Sandstrahlen. Je nach Auswahl des Lotmaterials und der Stahllegierung für den Grundkörper kann auch mit glatt geschliffener oder gedrehter Verbindungsfläche gearbeitet werden. Wie schon gesagt, sollte die Verbindung zwischen Verschleißring und den angrenzenden Flächen des Grundkörpers vollflächig erfolgen.

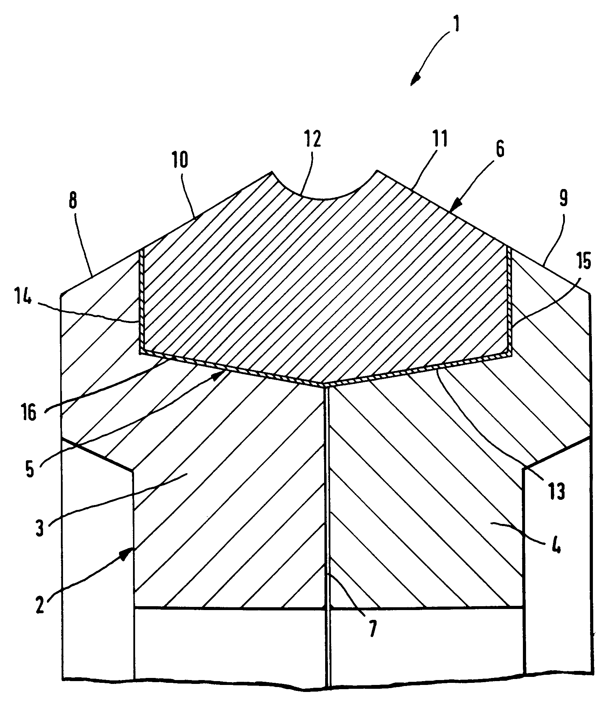

In der Zeichnung ist die Erfindung an Hand eines Ausführungsbeispiels näher veranschaulicht. Sie zeigt in einem Querschnitt die obere Hälfte einer Reduzierwalze (1). Die Reduzierwalze (1) weist einen Grundkörper (2) auf, der aus zwei spiegelbildlich geformten Grundkörperscheiben (3, 4) besteht. Der Grundkörper (2) weist umfangsseitig eine Ringnut (5) auf, in die ein Verschleißring (6) eingesetzt ist.

Die Grundkörperscheiben (3, 4) bestehen aus Stahl oder einem anderen Metall mit einem Wärmeausdehnungskoeffizienten, der durch Höhe der für den gewünschten Zweck nötigen Zugspannung nach dem Abkühlen bestimmt wird, und sind über einen Mittelspalt (7) voneinander getrennt. Umfangsseitig weisen die Grundkörperscheiben (3, 4) Schrägflächen (8, 9) auf, die sich in entsprechenden Schrägflächen (10̸, 11) des Verschleißrings (6) fortsetzen und in einer mittigen, hier kreisbogenförmigen Walzkaliber (12) enden. Das Walzkaliber (12) sowie die Walzkaliber gegenüberliegender Reduzierwalzen bilden innerhalb des Walzwerkes einen Durchlaß für Stangen- oder Rohrmaterial, das dann beim Durchlauf entsprechend der Formgebungen der Walzkaliber (12) und deren Abstand zueinander im Querschnitt reduziert und gestreckt wird.

Die Ringnut (5) hat einen V-förmigen Nutgrund (13) mit stumpfem V-Winkel, wobei die Ringnut (5) sich symmetrisch zum Mittelspalt (7) erstreckt. An den Nutgrund (13) schließen sich radial erstreckende Nutseitenwände (14, 15) an.

Der Verschleißring (6) ist über eine Lötverbindung (16) mit den Grundkörperscheiben (3, 4) verbunden. Die Lötverbindung (16) erstreckt sich vollflächig über den Nutgrund (13) und die Nutseitenwände (14, 15).

Die Herstellung der Reduzierwalze (1) geschieht in der Weise, daß Lotmaterial auf die Innenseiten der Ringnut (5) aufgetragen bzw. in die Nut eingelegt wird, beispielsweise in Form von gewalztem einfachen oder bi-metallischem, bandförmigem Lotmaterial oder in Form von netzartigen Lochstreifen. Die Grundkörperscheiben (3, 4) werden dann von beiden Seiten an den Verschleißring (6) angelegt. Die so gebildete Einheit von Grundkörper (2) und Verschleißring (6) wird anschließend in einen Ofen verbracht und dort auf 70̸0̸°C bis 110̸0̸°C erhitzt, und zwar unter Vakuum oder Schutzgas. Die Erhitzung hat zur Folge, daß sich der Grundkörper (2) radial stärker ausdehnt als der Verschleißring (6), wodurch das Lotmaterial unter Druck gesetzt wird und sich gut auch über die Nutseitenwände (14, 15) verteilt. Zusätzlich wird der Lötspalt im V-förmigen Nutgrund (13) durch Druck in axialer Richtung und dem hieraus resultierenden radialen Druck auf wenige 10̸0̸stel bis 10̸tel mm reduziert, wodurch sich eine hochfeste Lötverbindung (16) ergibt.

Bei der anschließenden Abkühlung der Reduzierwalze (1) erhärtet das Lotmaterial und stellt so eine feste Lötverbindung (16) zwischen Grundkörper (2) und Verschleißring (6) her. Bei weiterer Abkühlung schrumpft das Material des Grundkörpers (2) auf Grund des höheren Wärmeausdehnungskoeffizienten stärker als der Verschleißring (6), welcher aus Hartmetall oder einem Metallkarbid besteht. Die radial nach innen gerichteten Schrumpfkräfte werden über die Lötverbindung (16) an den Verschleißring (6) übertragen und sind dann bestrebt, den Verschleißring (6) radial nach innen zu stauchen. Hierdurch entstehen im Querschnitt des Verschleißrings (6) Druckspannungen. Diese Druckspannungen schützen den Verschleißring (6) gegen den Einfluß von auf ihn beim Betrieb einwirkenden Zugbelastungen.

## Patentansprüche

1. Metallkörper, insbesondere als Walzring, mit einem Grundkörper und einem am Umfang sitzenden Verschleißring, wobei der Grundkörper aus einem Material besteht, das einen höheren Wärmeausdehnungskoeffizienten und einen geringeren Verschleißwiderstand als das Material des Verschleißrings hat, wobei der Verschleißring (6) über eine Lötverbindung (16) mit dem Grundkörper (2) verbunden ist,
dadurch gekennzeichnet, daß Verschleißring (6) und Grundkörper (2) im Verhältnis zueinander derart ausgebildet sind, daß nach der für die Herstellung der Lötverbindung (16) notwendigen Erhitzung von Grundkörper (2) und Verschleißring (6) infolge der Abkühlung radial nach innen gerichtete Schrumpfkräfte von dem Grundkörper (2) über die Lötverbindung (16) auf den Verschleißring (6) unter Ausbildung einer Druckspannung über dessen Querschnitt übertragen werden.

2. Metallkörper nach Anspruch 1,
dadurch gekennzeichnet, daß der Grundkörper (2) in einer durch den Verschleißring (6) gehenden Teilungsebene (7) in zwei Grundkörperscheiben (3, 4) geteilt ist.

3. Metallkörper nach Anspruch 2,
dadurch gekennzeichnet, daß die Grundkörperscheiben (3, 4) einen Abstand (7) zueinander haben.

4. Metallkörper nach Anspruch 3,
dadurch gekennzeichnet, daß der Abstand (7) so bemessen ist, daß die Grundkörperscheiben (3, 4) auch bei Erhitzung auf die für die Herstellung der Lötverbindung (16) notwendigen Temperatur nicht zur Anlage kommt.

5. Metallkörper nach einem der Ansprüche 2 bis 4,
dadurch gekennzeichnet, daß die Teilungsebene durch die Mitte des Verschleißrings (6) geht.

6. Metallkörper nach einem der Ansprüche 1 bis 5,
dadurch gekennzeichnet, daß der Verschleißring (6) innerhalb einer Ringnut (5) im Grundkörper (2) sitzt und die Ringnut (5) einen V-förmigen Nutgrund (13) aufweist.

7. Metallkörper nach den Ansprüchen 5 und 6,
dadurch gekennzeichnet, daß der Nutgrund (13) symmetrisch zur Teilungsebene liegt.

8. Metallkörper nach Anspruch 6 oder 7,
dadurch gekennzeichnet, daß der Verschleißring (6) über die Lötverbindung (16) vollflächig mit allen Innenseiten (13, 14, 15) der Ringnut (5) verbunden ist.

9. Verfahren zur Herstellung des Metallkörpers nach einem der Ansprüche 1 bis 8, bei dem ein Verschleißring gefertigt sowie ein Grundkörper aus einem Material hergestellt wird, das einen höheren Wärmeausdehnungskoeffizienten und einen geringeren Verschleißwiderstand als das Material des Verschleißrings hat, und bei dem der Verschleißring anschliessend an dem Grundkörper dadurch fixiert wird, daß an einer Verbindungsfläche (13, 14, 15) zwischen Grundkörper (2) und Verschleißring (6) Lotmaterial aufgetragen wird und daß der Metallkörper (1) nach Zusammensetzen von Verschleißring (6) und Grundkörper (2) auf eine für die Herstellung einer Lötverbindung notwendigen Temperatur erhitzt und dann wieder abgekühlt wird,
dadurch gekennzeichnet, daß Grundkörper (2) und Verschleißring (6) bei der Herstellung derart ausgebildet werden, daß der Grundkörper (2) bei der Abkühlung des Metallkörpers (1) einen solchen Radialschrumpf entwickelt, daß über die Lötverbindung (16) radial nach innen gerichtete Schrumpfkräfte auf den Verschleißring (6) unter Ausbildung einer Druckspannung über dessen Querschnitt übertragen werden.

10. Verfahren nach Anspruch 9,
dadurch gekennzeichnet, daß die Herstellung der Lötverbindung (16) unter Schutzgas oder im Vakuum erfolgt.

11. Verfahren nach Anspruch 9 oder 10̸,
dadurch gekennzeichnet, daß wenigstens die für die Lötverbindung (16) vorgesehenen Verbindungsflächen (13, 14, 15) von Grundkörper (2) und Verschleißring (6) aufgerauht werden.

12. Verfahren nach einem der Ansprüche 9 bis 11,
dadurch gekennzeichnet, daß der Verschleißring (6) vollflächig über alle angrenzenden Flächen (13, 14, 15) mit dem Grundkörper (2) verbunden wird.

## Claims

1. Metal part, in particular a rolling ring, with a base and a wear ring sitting at the circumfernce thereof, whereby the base consists of a material with a higher heat expansion coefficient and lower wear resistance than the material of the wear ring, whereby the wear ring (6) is connected to the base (2) via a soldering joint (16),
characterized in that wear ring (6) and base (2) are designed relative to each other in such a manner that following the heating of the base (2) and wear ring (6) that is necessary for producing the soldernig joint (16), shrinking forces directed radially inward as a result of the cooling are transmitted by the base (2) via the soldernig joint (16) to the wear ring (6).

2. Metal part as claimed in claim 1, characterized in that the base (2) is divided in a division plane (7) that extends through the wear ring (6) into two base disks (3, 4).

3. Metal part as claimed in claim 2, characterized in that the base disks (3,4 ) are located at a distance (7) relative to each other.

4. Metal part as claimed in claim 3, characterized in that the distance (7) is such that the base disks (3, 4) do not contact each other even during the heating to the temperature necessary for producing the soldernig joint (16).

5. Metal part as claimed in one of claims 2 to 4, characterized in that the division plane extends through the center of the wear ring (6).

6. Metal part as claimed in one of claims 1 to 5, characterized in that the wear ring (6) sits within an annular groove (5) in the base, and the annular groove (5) has a V-shaped groove bottom (13).

7. Metal parts as claimed in claims 5 and 6, characterized in that the groove bottom (13) is positioned symmetrically to the division plane.

8. Metal part as claimed in claim 6 or 7, characterized in that the wear ring (6) is connected over its full surface by way of soldering joint (16) with all its interior surfaces (13, 14, 15) with the annular groove (5).

9. Process for the production of the metal part as claimed in one of claims 1 to 8, whereby a wear ring is produced and a base is produced from a material with a higher heat expansion coefficient and lower wear resistance than the material of the wear ring, and whereby the wear ring is subsequently fixed to the base in that solder material is applied at a connecting surface (13, 14, 15) between base (2) and wear ring (6), and that the metal part (1) is after the putting together of the wear ring (6) and base (2) heated to a temperatur necessary for producing a soldernig joint and is then cooled again, characterized in that base (2) and wear ring (6) are designed in such a manner during production that the base (2) develops such a radial shrinkage during the cooling of the metal part (1) that shrinking forces directed radially inward are transmitted via the soldernig joint (16) to the wear ring (6) resulting in a compressive strain via the cross-section thereof.

10. Process as claimed in claim 9, characterized in that the soldernig joint (16) is produced under inert gas or in a vacuum.

11. Process as claimed in claim 9 or 10, characterized in that at least the connecting surfaces (13, 14, 15) of base (2) and wear ring (6) intended for the soldering joint (16) are roughened.

12. Process as claimed in one of claims 9 to 11, characterized in that the wear ring (6) is connected over ist full surface via all adjoining surfaces (13, 14, 15) with the base (2).

## Revendications

1. Corps métallique, notamment sous la forme d'une bague de laminage, avec un corps de base et une bague d'usure reposant sur sa périphérie, le corps de base étant constitué d'un matériau qui possède un coefficient de dilatation thermique supérieur et une résistance à l'usure inférieure au matériau de la bague d'usure, la bague d'usure (6) étant assemblée au corps de base (2) au moyen d'une brasure (16),
**caractérisé** en ce que la bague d'usure (6) et le corps de base (2) sont configurés l'un par rapport à l'autre de telle sorte qu'à la suite de l'échauffement du corps de base (2) et de la bague d'usure (6) qui est nécessaire pour la réalisation de la brasure (16), du fait du refroidissement, des forces de retrait dirigées radialement vers l'intérieur sont transmises par le corps de base (2) sur la bague d'usure (6) par l'intermédiaire de la brasure (16), en exerçant une contrainte de compression sur la section de la bague d'usure (6).

2. Corps métallique selon la revendication 1, **caractérisé** en ce que le corps de base (2) est divisé en deux galettes de corps de base (3, 4) dans un plan de séparation (7) passant par la bague d'usure (6).

3. Corps métallique selon la revendication 2, **caractérisé** en ce que les galettes de corps de base (3, 4) présentent un intervalle (7) entre elles.

4. Corps métallique selon la revendication 3, **caractérisé** en ce que l'intervalle (7) est dimensionné de telle sorte que les galettes de corps de base (3, 4) n'entrent pas en application, même lors de l'échauffement à la température nécessaire pour la réalisation de la brasure (16).

5. Corps métallique selon une des revendications 2 à 4, **caractérisé** en ce que le plan de séparation passe par le milieu de la bague d'usure (6).

6. Corps métallique selon une des revendications 1 à 5, **caractérisé** en ce que la bague d'usure (6) repose à l'intérieur d'une rainure annulaire (5) dans le corps de base (2), et la rainure annulaire (5) présente un fond de rainure (13) en forme de V.

7. Corps métallique selon les revendications 5 et 6, **caractérisé** en ce que le fond de rainure (13) est situé symétriquement par rapport au plan de séparation.

8. Corps métallique selon la revendication 6 ou 7, **caractérisé** en ce que la bague d'usure (6) est, au moyen de la brasure (16), assemblée sur toute la surface à toutes les faces intérieures (13, 14, 15) de la rainure annulaire (5).

9. Procédé de fabrication du corps métallique selon une des revendications 1 à 8, selon lequel on fabrique une bague d'usure ainsi qu'un corps de base en un matériau qui possède un coefficient de dilatation thermique supérieur et une résistance à l'usure inférieure au matériau de la bague d'usure, et selon lequel la bague d'usure est ensuite fixée en position sur le corps de base par le fait qu'un matériau de brasage est appliqué sur une face d'assemblage (13, 14, 15) entre le corps de base (2) et la bague d'usure (6), et que le corps métallique (1), après avoir réuni la bague d'usure (6) et le corps de base (2), est échauffé à une température nécessaire pour la réalisation d'un assemblage par brasage, puis refroidi, **caractérisé** en ce que le corps de base (2) et la bague d'usure (6) sont, lors de leur fabrication, configurés de telle sorte que le corps de base (2) développe, lors du refroidissement du corps métallique (1), un retrait radial tel que, par l'intermédiaire de la brasure (16), des forces de retrait dirigées radialement vers l'intérieur sont transmises sur la bague d'usure (6), en exerçant une contrainte de compression sur la section de cette dernière.

10. Procédé selon la revendication 9, **caractérisé** en ce que la réalisation de la brasure (16) s'effectue sous gaz protecteur ou sous vide.

11. Procédé selon la revendication 9 ou 10, **caractérisé** en ce qu'au moins les faces d'assemblage (13, 14, 15) du corps de base (2) et de la bague d'usure (6) prévues pour la brasure (16) sont rendues rugueuses.

12. Procédé selon une des revendications 9 à 11, **caractérisé** en ce que la bague d'usure (6) est assemblée au corps de base (2) en pleine surface sur toutes les faces attenantes (13, 14, 15).
